**Europäisches Patentamt**

**European Patent Office**

**Office européen des brevets**

(11) Publication number: **0 185 094**
**B1**

(12) **EUROPEAN PATENT SPECIFICATION**

(45) Date of publication of patent specification: **28.02.90**

(21) Application number: **85902641.1**

(22) Date of filing: **22.05.85**

(86) International application number:
**PCT/JP85/00283**

(87) International publication number:
**WO 85/05309 05.12.85 Gazette 85/26**

(51) Int. Cl.⁵: **B 23 Q 33/00, B 23 Q 3/00**

(54) **CLAMP PROFILING CONTROL SYSTEM.**

(30) Priority: **23.05.84 JP 104121/84**

(43) Date of publication of application:
**25.06.86 Bulletin 86/26**

(45) Publication of the grant of the patent:
**28.02.90 Bulletin 90/09**

(84) Designated Contracting States:
**DE FR GB**

(56) References cited:
**EP-A-0 087 480**
**GB-A-2 020 852**
**JP-A-54 140 280**

(73) Proprietor: **FANUC LTD**
**3580, Shibokusa Aza-Komanba Oshino-mura**
**Minamitsuru-gun Yamanashi 401-05 (JP)**

(72) Inventor: **YAMAZAKI, Etuo**
**566-93, Shimoongata-cho**
**Hachioji-shi Tokyo 192-01 (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

## Description

The present invention relates to a clamp tracing control system.

Clamp tracing through utilization of clamp tracing control takes place, for example, in such a manner as shown in Fig. 4. At first, the position of a certain depth D in a model MDL at which clamp tracing is desired to effect (i.e. a clamp start position), indicated by LCZ, is prestored in a memory. When a stylus of a tracer head reaches the clamp start position LCZ during tracing, the feed of the stylus in the depthwise direction of the model MDL is stopped and the stylus is fed horizontally without contacting the model, after which tracing is resumed at a position where the stylus makes contact with the model MDL again. Upon completion of each tracing stroke, the clamp start position LCZ is shifted down, for instance, by a predetermined infeed ΔD and then similar clamp tracing is performed. This operation repeats itself until the shape of the model MDL is traced down to its bottom.

In this kind of clamp tracing control heretofore employed, since the tracing is carried out at an ordinary tracing feed rate until the clamp start position LCZ is reached and the tracing feed is abruptly stopped at the clamp start position LCZ, the following disadvantages are encountered.

(1) The tracing feed cannot be stopped exactly at the clamp start position LCZ, so the stylus overruns the position. This will introduce irregularities in the surface of a workpiece which is cut by the clamp tracing.

(2) If the overrun is large, then the clamp feed will take place at a level lower than the clamp start position LCZ, so that in the subsequent tracing feed the stylus will cross again the previous clamp start position LCZ, making it difficult to distinguish the current clamp start position from the preceding one. As a result of this, the process for returning to the tracing feed becomes relatively difficult, impeding the stability of clamp control.

The present invention offers a solution to such problems as mentioned above, and has for its object to decelerate the tracing feed before the clamp start position is reached.

The present invention resides in a clamp tracing control system for tracer control equipment which performs tracer control according to a tracing direction and a tracing speed calculated from signals available from a tracer head tracing with a stylus the surface of a model. The clamp tracing system of the present invention is provided with an input device for inputting data which defines a tracing operation, including a clamp start position and a deceleration area set to lie before the clamp start position, a memory for storing the data, a machine position sensor for sensing the machine position in a vertical axis, and a processor for effecting control in accordance with the sensed position information read out of the machine position sensor and the stored data from the memory. When the stylus of the tracer head enters into the deceleration area as stored in the memory, the tracing feed rate is reduced, after which the decelerated stylus reaches the clamp start position, the tracing feed is discontinued and the clamp feed is initiated. Accordingly, the system of the present invention provides the following advantages:

(1) Since the tracing feed is decelerated before the stylus reaches the clamp start position, its overrun at the clamp start position decreases, ensuring that the surface of a workpiece cut by the clamp tracing becomes smooth.

(2) Since the deceleration takes place before the stylus reaches the clamp start position, its amount of overrun decreases which occurs until the clamp feed is initiated after the detection of the clamp start position. This facilitates the process for returning to the tracing feed when the stylus gets into contact with the model again. Hence, the stability of clamp control increases.

Brief description of the drawings

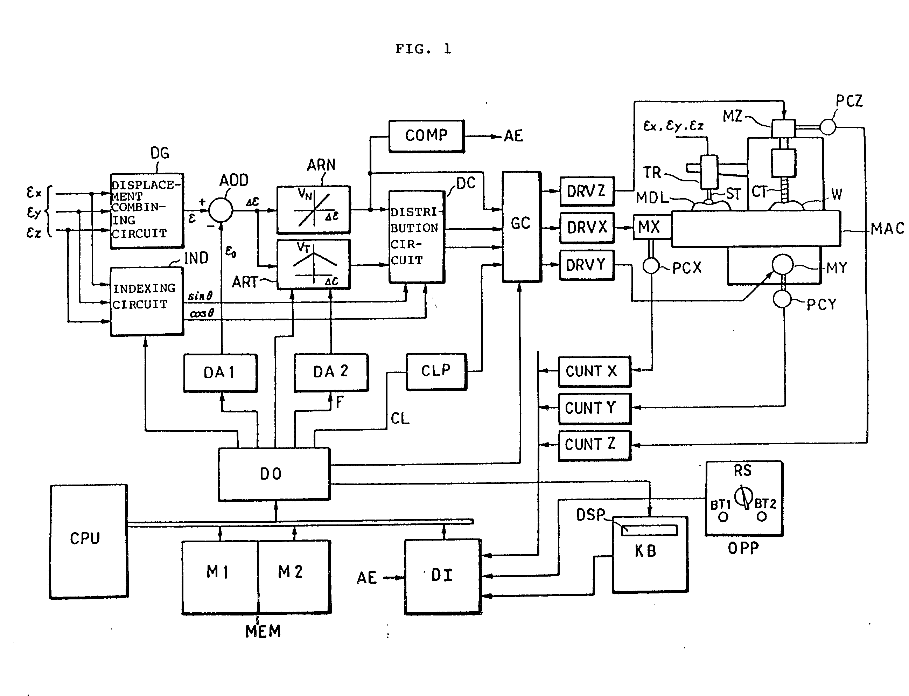

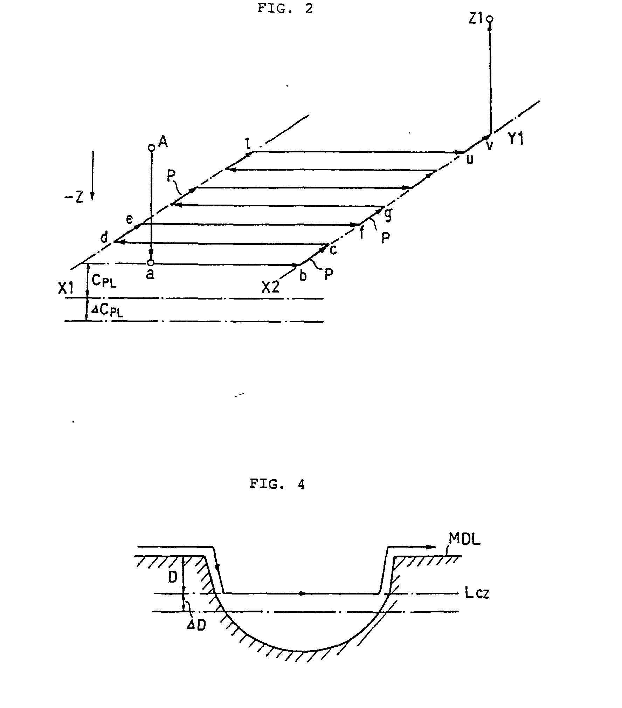

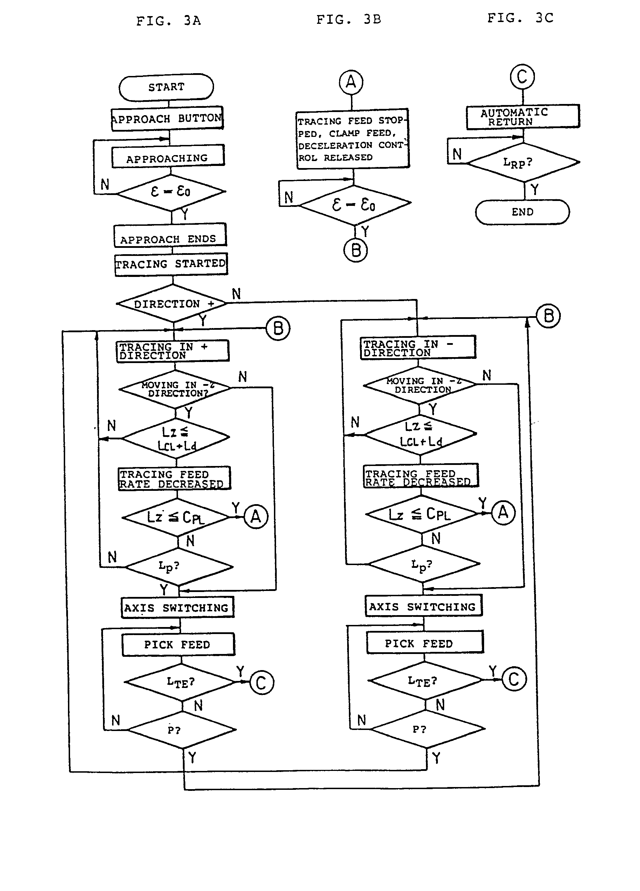

Fig. 1 is a block diagram illustrating the principal part of an embodiment of the present invention; Fig. 2 is a diagram for explaining an example of a tracing path; Fig. 3 is a flowchart for explaining the operation of this invention system; and Fig. 4 is a diagram explanatory of clamp tracing.

Fig. 1 illustrates in block form an embodiment of the present invention. Reference characters DG and IND indicate a displacement combining circuit and an indexing circuit which are supplied with displacement signals $\varepsilon_x$, $\varepsilon_y$ and $\varepsilon_z$ from a tracer head TR, ARN and ART velocity calculation circuits, ADD an adder, DC a distribution circuit, COMP a comparator, GC a gate circuit, DRVX, DRVY and DRVZ amplifying output circuits, MX, MY and MZ servo motors, PCX PCY and PCZ position sensors, MDL a model, ST a stylus, CT a cutter, W a workpiece, MAC a tracing machine, CNTX, CNTY and CNTZ reversible counters each of which counts pulses from the corresponding one of the position sensors to indicate the current machine position of the stylus, CLP a clamp feed command generator, OPP an operator panel, RS a feed rate or like setting dial, BT1 and BT2 push buttons, KB a keyboard, DSP a display part, DI a data input device, MEM a memory composed of a data memory part M1 and a control program part M2, DO a data output device, CPU a processor and DA1 and DA2 D/A converters.

The stylus ST is brought into contact with the model MDL and is then fed by the servo motors. Based on the displacement signals $\varepsilon_x$, $\varepsilon_y$ and $\varepsilon_z$ corresponding to the displacement of the stylus ST, the displacement combining circuit DG yields a composite displacement signal

$$\varepsilon = \sqrt{\varepsilon_x{}^2 + \varepsilon_y{}^2 + \varepsilon_z{}^2}$$

2

# EP 0 185 094 B1

and the indexing circuit IND displacement direction signals sin θ and cos θ. The composite displacement signal ε is applied to the adder ADD, wherein a difference Δε between it and a reference displacement signal $\varepsilon_0$ is obtained. The velocity calculation circuits ARN and ART create normal and tangential velocity signals $V_N$ and $V_T$. The distribution circuit DC produces a command velocity signal based on the displacement direction signals sin θ and cos θ, and provides the command velocity signal to the gate circuit GC. The command velocity signal is applied to one of the amplifying output circuits selected by the gate circuit GC and the associated servo motor is driven corresponding to the command velocity signal, feeding the cutter CT and the stylus ST as one body.

Tracing operation data including data on a clamp level is entered through the keyboard KB or the like and stored in the memory MEM. The processor CPU reads out the data from the memory MEM in accordance with the tracing operation and controls the tracing path including the clamp level according to the data. Data shown in the following table can be used as the input data.

TABLE 1

| Item | Symbol | Code |
|---|---|---|
| Modes | (See Table 2) | AO1 |
| Reference Displacement | $\varepsilon_0$ | AO2 |
| Approach Axis | X, Y, Z | AO3 |
| Approach Direction | +, − | AO4 |
| Approach Speed | $V_{AP}$ | F1 |
| Tracing Direction | +, − | AO5 |
| Tracing Speed | $V_{TF}$ | F2 |
| Pick Feed Direction | +, − | |
| Pick Feed Speed | $V_{PF}$ | F3 |
| Pick Feed Value | P | AO6 |
| Tracing Stroke Limit | $L_P$ | X1 |
| " | $L_N$ | X2 |
| Tracing Control End | $L_{TE}$ | Y1 |
| Automatic Return | ON, OFF | AO7 |
| Automatic Return Speed | $V_{AR}$ | F4 |
| Automatic Return Position | $L_{RP}$ | Z1 |
| Clamp Level Initial Position | $C_{PL}$ | CO1 |
| Clamp Level Variation | $\Delta C_{PL}$ | CO2 |
| Clamp Level Final Position | $C_{PLE}$ | CO3 |
| Deceleration Area Before Clamp | $L_\alpha$ | CO4 |
| Tracing Deceleration Speed | $V_{TFD}$ | F5 |

3

TABLE 2

| | Modes | | Sub modes |
|---|---|---|---|
| 1 | Manual Tracing | | |
| 2 | Both Ways Scan Tracing | | 45° Feed Tracing |
| 3 | One Way Scan Tracing | | |
| 4 | 360° Contour Tracing | | Axial-Direction Pick Feed |
| | | | Z-Axis Pick Feed |
| 5 | Partial Contour Tracing | | |
| 6 | Three Dimensional Tracing | | |
| 7 | Clamp Tracing | | |

In the case where the stylus approaches a point a from a starting point A, the tracing stroke limit $L_P=X1$, $L_N=X2$, the pick feed value P, the tracing control end $L_{TE}=Y1$, the automatic return position $L_{RP}=Z1$, the clamp level initial position $C_{PL}=CO1$, tracing is performed via a route a, b, c, ... u, v, clamp tracing is executed in segments a to b, c to d, ... t to u and the stylus is automatically returned from the tracing control end Y1 to the position Z1 in accordance with the data on the speeds and directions, as shown in Fig. 2. Control is effected following the flowchart depicted in Figs. 3A to 3C.

Upon depression of an approach button (not shown), the processor CPU reads out of the memory MEM the data such as the approach axis, the approach direction and the approach speed and then provides a signal to the gate circuit GC via the gate output device DO to activate the amplifying output circuit DRVZ, causing the servo motor MZ to bring down the tracer head TR and the cutter CT. The speed at which the stylus and the cutter descend in this case can be determined by the data that is provided via the data output device DO to the D/A converter DA2.

Before the stylus ST gets into contact with the model MDL the displacement signals $\varepsilon_x$, $\varepsilon_y$ and $\varepsilon_z$ are zero, so the difference signal $\Delta\varepsilon$ is equal to the reference displacement signal $\varepsilon_0$. When the stylus ST is brought into contact with the model MDL and the composite displacement signal $\varepsilon$ becomes equal to the reference displacement signal $\varepsilon_0$, the comparator will detect that the difference signal $\Delta\varepsilon$ is zero, and apply an approach end signal AE to the data input device DI. When the processor CPU reads out the approach end signal AE and detects the completion of approach, tracing will be started.

Upon the start of tracing, the processor CPU will read out data such as the mode, the reference displacement, the tracing direction and the tracing speed $V_{TF}$, starting tracer control. The tracing speed $V_{TF}$ is applied via the D/A converter DA2 to the velocity calculation circuit ART. The reference displacement data is converted by the D/A converter DA1 to an analog reference displacement signal $\varepsilon_0$, which is provided to the adder ADD. The servo motor MX is driven in a direction defined by the tracing direction data. Further, the processor CPU reads out the clamp level initial position $C_{PL}$ and the deceleration area $L_a$ from the memory MEM and compares $C_{PL}+L_a$ and the contents $L_Z$ of the reversible counter CNTZ indicating the current position of the stylus ST.

When it is detected by this comparison that the contents of the reversible counter CNTZ has decremented lower than $C_{PL}+L_a$, the processor reads out the deceleration speed $V_{TFD}$ from the memory and applies it to the D/A converter DA2, decreasing the tracing speed. Next, the processor CPU compares the contents of the reversible counter CNTZ with the clamp level initial position $C_{PL}$ and when they become equal to each other, the processor provides, by an interrupt operation, a start signal via the data output device DO to the clamp feed command generator CLP to activate it and, at the same time, switches the gate circuit GC, provides a clamp feed command signal from the CLP to a predetermined one of the servo motors. By this operation the stylus ST is fed in the horizontal direction without tracing the model, thus effecting the clamp feed at a predetermined level. At this time the processor CPU resets the tracing speed from the tracing deceleration speed $V_{TFD}$ to the predetermined tracing speed $V_{TF}$.

During the clamp feed, since the displacement signals $\varepsilon_x$, $\varepsilon_y$ and $\varepsilon_z$ from the stylus ST are zero, the difference signal $\Delta\varepsilon$ is equal to the reference displacement signal $-\varepsilon_0$, but when the stylus ST is moved into contact with the model MDL again, the composite displacement signal $\varepsilon$ becomes equal to the reference displacement signal $\varepsilon_0$ and the difference signal $\Delta\varepsilon$ becomes zero. Having detected that the difference signal $\Delta\varepsilon$ is zero, the comparator COMP delivers the approach end signal AE to the data input device DI. The processor CPU reads out the approach end signal AE and detects that the stylus ST is brought into contact with the model MDL by the clamp feed. Then the processor deactivates the clamp command

4

generator CLP via the data output device DO and changes over the gate circuit GC, stopping the clamp feed and resuming the aforementioned tracing operation.

Moreover, the processor CPU reads out the tracing stroke limits $L_P$ and $L_N$ from the memory MEM and compares them with the contents of the reversible counter CNTX which indicates the current position of the stylus ST. When the contents of the reversible counter CNTX and the tracing stroke limit $L_N$ become equal, for example, in −ve direction tracing, the processor CPU carries out the axis switching and then reads out data such as the pick feed direction, the pick feed speed and the pick feed value P, performing pick feed control. When the contents of the reversible counter CNTY become equal to the pick feed value P after the start of the pick feed, the processor CPU performs +ve direction tracing. Further, the processor CPU detects whether the tracing control end has been reached or not. If it is found during the pick feed that the tracing control end $L_{TE}$ has been reached, then the processor CPU will read out data such as the automatic return, the automatic return speed and the automatic return position $L_{RP}$ from the memory MEM. Since the automatic return is ON, the servo motor MZ is driven and when the contents of the reversible counter CNTZ become equal to the automatic return position $L_{RP}$, tracing control for one cutting operation is completed.

In the case where repetitive tracing is preset by an input from the keyboard or the like, the processor CPU will return the stylus ST to the approach start point A by known positioning control after the automatic return operation and execute again the abovementioned clamp tracing. In this case, however, the clamp tracing takes place at a level $C_{PL}-\Delta C_{PL}$ which is the sum of the aforesaid clamp level initial position $C_{PL}$ and the clamp level variation $\Delta C_{PL}$ prestored in the memory MEM in consideration of the cutting ability or the like of the cutter. The deceleration start position in this instance is $C_{PL}-\Delta C_{PL}+L_a$.

The tracing stroke limits $L_P$ and $L_N$, the tracing control end $L_{TE}$, the automatic return position $L_{RP}$, the pick feed value P, the clamp level initial position $C_{PL}$, the clamp level variation $\Delta C_{PL}$, the deceleration area before clamp $L_a$ and the clamp level final position $C_{PLE}$ can also be obtained by setting in the memory MEM the contents of the reversible counters which are obtained by moving the stylus to its respective positions in the manual feed mode, instead of by entering the data from the keyboard KB.

Even during the tracing operation the tracing path including the clamp level can be modified by rewriting the data of the memory MEM. For example, the data of the memory MEM is read out and displayed on the display part DSP, where it is corrected and rewritten by manipulating the keyboard KB. The position where to start the clamp feed, that is, the clamp level initial position $C_{PL}$, the clamp level variation $\Delta C_{PL}$, the deceleration area $L_a$ and the clamp level final position $C_{PLE}$ can easily be corrected.

While the above embodiment is adapted to prestore all data defining the tracing operation and control the tracing path including the clamp tracing path in accordance with the data, it is not always necessary for attaining the object of the present invention that all the data defining the tracing operation be prestored in a memory. For instance, the tracing stroke limits may also be controlled by means of a conventional limit switch.

As described above, according to the present invention, a deceleration area is provided immediately before the clamp start position and the tracing feed rate is decreased before the stylus reaches the clamp start position, so that an overrun at the clamp start position decreases and the surface of a workpiece cut by the clamp tracing is smooth or flat. Furthermore, since the amount of overrun decreases which occurs until the clamp feed is initiated after the detection of the clamp start position, the process for returning to the tracing feed when the stylus gets into contact with the model again is facilitated, providing for enhanced stability in clamp control.

## Claim

A clamp tracing control system for tracer control equipment which performs tracer control according to a tracing direction and a tracing speed calculated from signals available from a tracer head tracing with a stylus the surface of a model, characterized by an input device for inputting data defining a tracing operation including a clamp start position and a deceleration area set to lie before the clamp start position, a memory for storing the data, a machine position sensor for sensing the machine position in a vertical axis, and a processor for effecting control based on the sensed position information read out from the machine position sensor and the stored data from the memory, wherein when the stylus of the tracer head enters into the deceleration area as stored in the memory, its tracing feed rate is decreased and when the decelerated stylus reaches the clamp start position, its tracing feed is discontinued and clamp feed is initiated.

## Patentanspruch

Kopier-Klemmsteuerungssystem für eine Kopierer-Steuerungseinrichtung, die eine Kopierer-Steuerung entsprechend einer Kopierrichtung und einer Kopiergeschwindigkeit durchführt, die aus Signalen berechnet sind, welche von einem Kopierkopf bereitgestellt sind, der die Oberfläche eines Modells mit einem Taster abtastet, gekennzeichnet durch

— eine Eingabeeinrichtung zum Eingeben von Daten, die einen Kopiervorgang einschließlich einer Klemmbeginnposition und eines Verzögerungsbereichs, der so eingestellt ist, daß er vor der Klemmbeginnposition liegt, definieren,

— einen Speicher zum Speichern der Daten,

— einen Maschinenpositionssensor zum Erfassen der Maschinenposition längs einer senkrechten Achse und

— einen Prozessor zum Bewirken einer Steuerung auf der Grundlage der Positionserfassungs-Information, die aus dem Maschinenpositionssensor ausgelesen ist, und der in dem Speicher gespeicherten Daten, wobei, wenn der Taster des Kopierkopfes in den Verzögerungsbereich, wie er in dem Speicher gespeichert ist, eintritt, die Kopiervorschubrate herabgesetzt wird und wenn der verzögerte Taster die Klemmbeginnposition erreicht, dessen Kopiervorschub unterbrochen wird und ein Klemmvorschub, nämlich ein Vorschub bei unterdrücktem Absenken des Tasters, initiiert wird.

**Revendication**

Un système de commande de copiage avec avance à niveau fixé pour un équipement de commande de copiage qui effectue une commande de copiage conformément à une direction de copiage et une vitesse de copiage qui sont calculées à partir de signaux que fournit un palpeur qui balaie la surface d'un modèle avec un doigt de palpeur, caractérisé par un dispositif d'entrée destiné à introduire des données qui définissent une opération de copiage, comprenant une position de début d'avance à niveau fixé et une zone de décélération qui est établie de façon à se trouver avant la position de début d'avance à niveau fixé, une mémoire pour enregistrer les données, un capteur de position de machine destiné à détecter la position de machine selon un axe vertical, et un processeur destiné à effectuer une commande sur la base de l'information de position détectée qui est fournie par le capteur de position de machine, et des données enregistrées qui proviennent de la mémoire, dans lequel lorsque le doigt de palpeur entre dans la zone de décélération qui est enregistrée dans la mémoire, sa vitesse d'avance de copiage est diminuée, et lorsque le doigt de palpeur ralenti atteint la position de début d'avance à niveau fixé, son avance de copiage est arrêtée et l'avance à niveau fixé est commencée.

FIG. 1

FIG. 2

FIG. 4

FIG. 3A          FIG. 3B          FIG. 3C